# EUROPEAN PATENT APPLICATION

(11) **EP 4 726 963 A1**
(43) Date of publication of application: **15.04.2026**
(21) Application number: 25208389.4
(22) Date of filing: 13.10.2025
(51) Int. Cl.: H02J 7/60, H02J 7/80, H02J 7/90

(54) **ELECTRIC ASSEMBLY AND METHODS OF CONNECTING/DISCONNECTING**

(30) Priority: 11.10.2024 US 202418913557
(71) Applicant: PRATT & WHITNEY CANADA CORP., Longueuil, Québec J4G 1A1 (CA)
(72) Inventor: GARIEPY, Raphael, Longueuil, Quebec J4G 1A1 (CA); KHARAL, Fraz, Longueuil, Quebec J4G 1A1 (CA); SHENOUDA, Antwan, Longueuil, Quebec J4G 1A1 (CA); ROBACHE, Remi, Longueuil, Quebec J4G 1A1 (CA)
(74) Representative: Dehns

(57) **Abstract**

An electric assembly (24) for an aircraft (18) is provided that includes a battery string (60), a switch (94), a battery charging system (56), and a charge monitoring device (50). The battery string includes a plurality of battery modules (62) and a contactor (72). The plurality of battery modules are electrically connected in series. The contactor is disposable in an open configuration or a closed configuration. The battery charging system is in communication with the battery string, and configured to perform a charging operation of the battery string. The charge monitoring device includes a processor and non-transitory memory. The non-transitory memory stores instructions executable by the processor, causing the processor to determine a charging parameter of the contactor, identify the presence of a fault condition for the contactor, and signal the switch to actuate the contactor to the open configuration. The presence of the fault condition indicates the charging parameter exceeds the fault condition threshold.

## Description

### TECHNICAL FIELD

This application relates to aircraft electric assemblies in general, and to a system and method for identifying proper or improper charging conditions of a battery within an aircraft electric assembly in particular.

### BACKGROUND INFORMATION

Propulsion system architectures for aircrafts, such as hybrid-electric propulsion systems, may include one or more electric assemblies configured to support various functions of the propulsion system and an associated aircraft. These electric assemblies are supported by battery systems which are capable of recharging operations while the aircraft is physically grounded. Various systems and methods for identifying when these electric assemblies are outside of normal charging specification limits are known. While these known systems and methods may be suitable for their intended purposes, there is always room in the art for improvement.

### SUMMARY

According to an aspect of the present disclosure, an electric assembly for an aircraft is provided. The electric assembly includes a battery string, a switch, a battery charging system, and a charge monitoring device. The battery string includes a plurality of battery modules and a contactor. The plurality of battery modules are electrically connected in series. The contactor is disposable in an open configuration or a closed configuration. The switch is configured to actuate the contactor between the open configuration or the closed configuration. The battery charging system is in communication with the battery string. The battery charging system is configured to perform a charging operation of the battery string. The charge monitoring device includes a processor and non-transitory memory. The processor is in signal communication with the non-transitory memory. The non-transitory memory stores instructions which are executable by the processor. The instructions cause the processor to determine a charging parameter of the contactor, identify the presence of a fault condition for the contactor, and signal the switch to actuate the contactor. The presence of the fault condition is identified by comparing the charging parameter to a fault condition threshold. The presence of the fault condition indicates the charging parameter exceeds the fault condition threshold. The switch is signaled to actuate the contactor from the closed configuration to the open configuration upon identifying the presence of the fault condition for the contactor.

In any of the aspects or embodiments described above and herein, the battery string includes a second contactor. The second contactor is disposable between the open configuration and the closed configuration. The switch is configured to actuate the second contactor between the open configuration and the closed configuration. The instructions when executed by the processor further cause the processor to determine a second charging parameter of the second contactor, identify the presence of a fault condition for the second contactor, and signal the switch to actuate the second contactor. The presence of the fault condition is identified by comparing the charging parameter to the fault condition threshold. The presence of the fault condition indicates the second charging parameter exceeds the fault condition threshold. The switch is signaled to actuate the second contactor from the closed configuration to the open configuration upon identifying the presence of the fault condition for the second contactor.

In any of the aspects or embodiments described above and herein, the electric assembly includes a second charge monitoring device. The second charge monitoring device includes a second processor and non-transitory memory. The second charge monitoring device is electrically connected to and in signal communication with the contactor and/or the second contactor. The second processor is in signal communication with the non-transitory memory. The non-transitory memory stores instructions which, when executed by the second processor, cause the second processor to determine a charging parameter of the contactor and/or a second charging parameter of the second contactor, identify the presence of the presence of the fault condition for the contactor and/or the second contactor, and signal the switch to actuate the contactor and/or the second contactor. The presence of the fault condition is identified by comparing the charging parameter and/or the second charging parameter to the fault condition threshold. The presence of the fault condition indicates the charging parameter and/or the second charging parameter exceeds the fault condition threshold. The switch is signaled to actuate the contactor and/or the second contactor from the closed configuration to the open configuration upon identifying the presence of the fault condition for the contactor and/or the second contactor.

In any of the aspects or embodiments described above and herein, the second charge monitoring device is electrically connected to the charge monitoring device and in signal communication with the contactor through the charge monitoring device.

In any of the aspects or embodiments described above and herein, signal communication between the charge monitoring device and the contactor is discrete from signal communication between the second charge monitoring device and the contactor.

In any of the aspects or embodiments described above and herein, the charge monitoring device comprises an electronic engine controller (EEC) for a propulsion system of the aircraft.

In any of the aspects or embodiments described above and herein, the charge monitoring device comprises a battery monitoring system (BMS).

In any of the aspects or embodiments described above and herein, the charging parameter and/or the second charging parameter comprises at least one of: a current, a voltage, or a temperature.

In any of the aspects or embodiments described above and herein, the electric assembly further includes an emergency override input. The emergency override input is electrically connected to the contactor and in signal communication with the switch. The emergency override input is configured to signal the switch to actuate the contactor from the closed configuration to the open configuration.

In any of the aspects or embodiments described above and herein, the charge monitoring device may include at least one sensor for determining the charging parameter of the contactor. The charge monitoring device may include at least one sensor for determining the second charging parameter of the second contactor.

In any of the aspects or embodiments described above and herein, the electric assembly includes a second contactor, a second switch, and a second charge monitoring device. The contactor is disposable in an open configuration or a closed configuration. The second switch is configured to actuate the second contactor between the open configuration or the closed configuration. The second charge monitoring device includes a second processor and non-transitory memory. The second processor is in signal communication with the non-transitory memory. The non-transitory memory stores instructions which are executable by the second processor. The instructions cause the second processor to determine the charging parameter of the second contactor, identify the presence of a fault condition for the second contactor, and signal the second switch to actuate the second contactor. The presence of the fault condition is identified by comparing the charging parameter to a fault condition threshold. The presence of the fault condition indicates the charging parameter exceeds the fault condition threshold. The second switch is signaled to actuate the second contactor from the closed configuration to the open configuration upon identifying the presence of the fault condition for the second contactor.

According to another aspect of the present disclosure, a propulsion system for an aircraft is provided that includes a battery, a contactor, a switch, and a charge monitoring device. The contactor is in communication with the batter. The contactor is disposable between an open configuration or a closed configuration. The switch is configured to actuate the contactor between the open configuration or the open configuration. The charge monitoring device is electrically connected to and in signal communication with the contactor. The charge monitoring device is configured to determine a charging parameter of the contactor and determine a presence of a fault condition. Upon the determination of the presence of the fault condition, the contactor is actuated to the open configuration.

In any of the aspects or embodiments described above and herein, the propulsion system may include a battery charging system in communication with the battery. The battery charging system is configured to perform a charging operation of the battery.

In any of the aspects or embodiments described above and herein, the propulsion system may include an emergency override input electrically connected to the contactor, the emergency override input configured to actuate the contactor from the closed configuration to the open configuration.

In any of the aspects or embodiments described above and herein, the charge monitoring device may comprise a battery monitoring system (BMS) or an electronic engine controller (EEC).

In any of the aspects or embodiments described above and herein, the propulsion system may include a second contactor in communication with the battery. The second contactor is disposable between the open configuration or the closed configuration. The switch is configured to actuate the second contactor between the open configuration or the closed configuration. The charge monitoring device is electrically connected to and in signal communication with the second contactor. The charge monitoring device is configured to determine the charging parameter of the second contactor and determine the presence of the fault condition in the contactor or the second contactor. Upon determination of the presence of the fault condition, the contactor or the second contactor is actuate to the open configuration.

In any of the aspects or embodiments described above and herein, the second charge monitoring device may comprise a battery monitoring system (BMS) or an electronic engine controller (EEC).

In any of the aspects or embodiments described above and herein, the charging parameter comprises at least one of: a current, a voltage, or a temperature.

According to another aspect of the present disclosure, a method of disconnecting a battery in an electric assembly of an aircraft propulsion system is provided. The method includes the steps of performing a charging operation on a battery within an electric assembly, determining a charging parameter of a contactor using a charge monitoring device, identifying a presence of a fault condition for the contactor, and actuating the contactor to an open configuration upon identifying the presence of a fault condition of the contactor. The battery is in communication with the contactor. The contactor is disposable between the open configuration or a closed configuration. The presence of the fault condition is identified where the charging parameter exceeds the fault condition threshold.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 depicts an aircraft including a propulsion system, according to one or more embodiments of the present disclosure.
FIG. 2 diagrammatically depicts a sectional view of a present disclosure hybrid electric propulsion system.
FIG. 3 schematically depicts a battery string for a battery, according to one or more embodiments of the present disclosure.
FIG. 4 schematically depicts a portion of the electric assembly including the battery and the electrical distribution system.
FIG. 5 schematically depicts an exemplary electrical/electronic communications arrangement of electric assembly shown in FIG. 4, according to one or more embodiments of the present disclosure.
FIG. 6 schematically depicts an exemplary electrical/electronic communications arrangement of electric assembly shown in FIG. 4, according to one or more embodiments of the present disclosure.
FIG. 7 illustrates a block diagram depicting a method disconnecting an electric assembly, according to one or more embodiments of the present disclosure.

### DETAILED DESCRIPTION

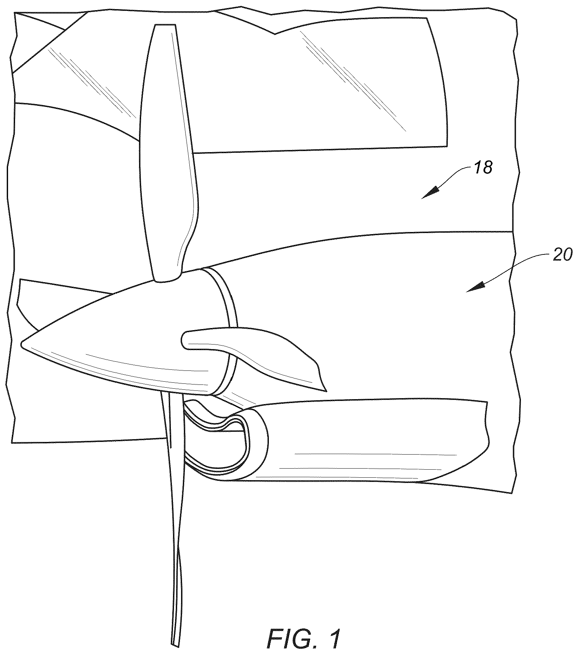

FIG. 1 depicts an aircraft 18 including at least one propulsion system 20. Briefly, the aircraft 18 may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft 18 may be a manned aerial vehicle or an unmanned aerial vehicle (UAV, e.g., a drone).

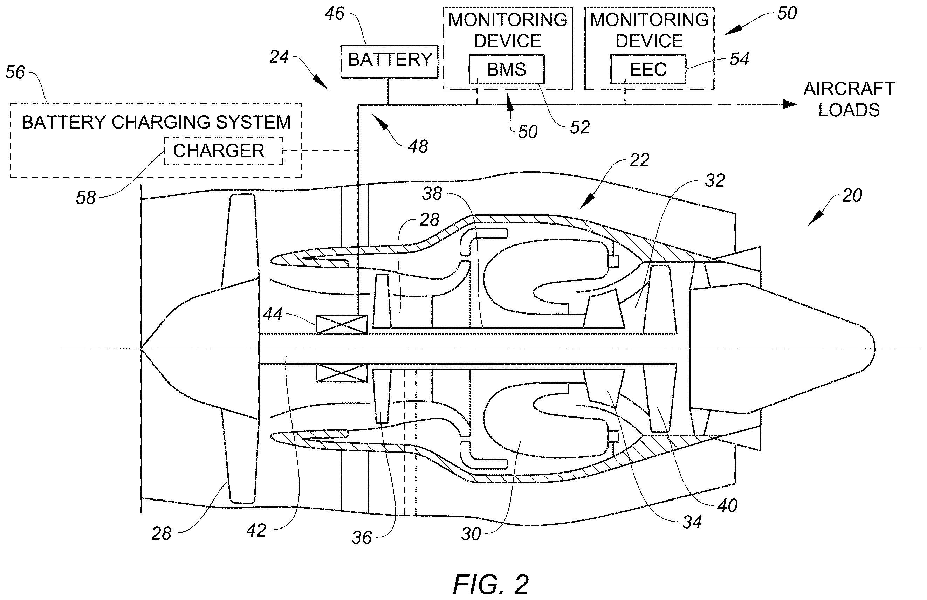

The present disclosure propulsion system is configured as a hybrid electric propulsion (HEP) system 20 which uses power generated by at least one thermal engine and power generated by at least one electric motor. The term "thermal engine" as used herein includes various types of gas turbine engines, piston engines, and the like that combust traditional aviation fuels and/or sustainable aviation fuels (SAFs). FIG. 2 diagrammatically shows a thermal engine 22 in the form of a gas turbine engine and an electric assembly 24.

The thermal engine 22 comprises in serial flow communication, a fan 26 through which ambient air is propelled, a compressor section 28 for pressurizing the air, a combustor 30 in which the compressed air is mixed with fuel and ignited for generating an annular stream of hot combustion gases, and a turbine section 32 for extracting energy from the combustion gases. High pressure rotor(s) 34 of the turbine section 32 are drivingly engaged to high pressure rotor(s) 36 of the compressor section 28 through a high pressure shaft 38. Low pressure rotor(s) 40 of the turbine section 32 are drivingly engaged to the fan rotor 26 and to other low pressure rotor(s) (not shown) of the compressor section 28 through a low pressure shaft 42 extending within the high pressure shaft 38 and rotating independently therefrom.

The gas turbine engine shown in FIG. 2 is a nonlimiting example of a thermal engine 22. The present disclosure HEP system 20 may include other gas turbine engine configurations, or the thermal engine 22 may be a piston engine or a rotary engine.

The electric assembly 24 includes an electric motor 44, a battery 46, an electrical distribution system 48, and a plurality of charge monitoring devices 50. The charge monitoring device(s) 50 may include a battery monitoring system (BMS) 52 and/or an electronic engine controller (EEC) 54. The electric motor 44 is electrically connected to the electric assembly 24 through the electrical distribution system 48. In some embodiments, the electric assembly 24 may include a battery charging system 56 including a charger 58 to perform charging operations of the battery 46 after the aircraft 18 has landed and is physically grounded.

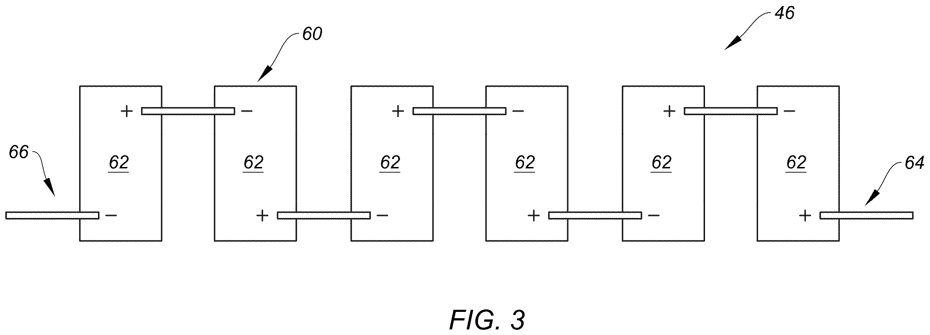

FIG. 3 schematically depicts an exemplary battery string 60 of battery 46. The battery string 60 of FIG. 3 includes a plurality of battery modules 62 (e.g., battery packs) electrically connected in series to form the battery string 60. For example, each battery module 62 of the battery string 60 may be electrically connected in series (e.g., positive to negative or negative to positive) to one or more other battery modules 62 of the battery string 60. The battery string 60 includes a positive string terminal 64 and a negative string terminal 66 for connecting the battery string 60 in electrical communication with other components of the battery 46 and/or the electrical distribution system 48. The battery string 60 of FIG. 3 includes six (6) battery modules 62 electrically connected in series. The present disclosure, however, is not limited to any particular number of battery modules 62 for the battery string 60. Each battery module 62 may include a plurality of discrete battery cells electrically connected to each other (e.g., using series and/or parallel electrical connections) to form the battery module 62, and as necessary to configure the battery string 60 with the desired electrical characteristics (e.g., voltage output, power output, etc.) for the battery 46.

The battery 46 is configured to selectively supply electrical power to the electrical distribution system 48 independently (e.g., as a single power source for the electric assembly 24) or in combination with one or more other electrical power sources (e.g., an electrical generator). The plurality of battery modules 62 (e.g., battery packs), battery cells, and/or the like electrically connected together in series and/or parallel as necessary to configure the battery 46 with the desired electrical characteristics (e.g., voltage output, current output, storage capacity, etc.). The present disclosure is not limited to any particular configuration of battery 46. The battery 46 (e.g., and its battery cells) may be configured as a rechargeable battery having a battery chemistry including, but not limited to, lead acid, nickel cadmium (NiCd), nickel-metal hydride (Ni-MH), lithium-ion (Li-ion), lithium-polymer (Li-poly), lithium metal, and the like. The battery 46 may be disposed, for example, in the aircraft 18 and/or its HEP propulsion system 20.

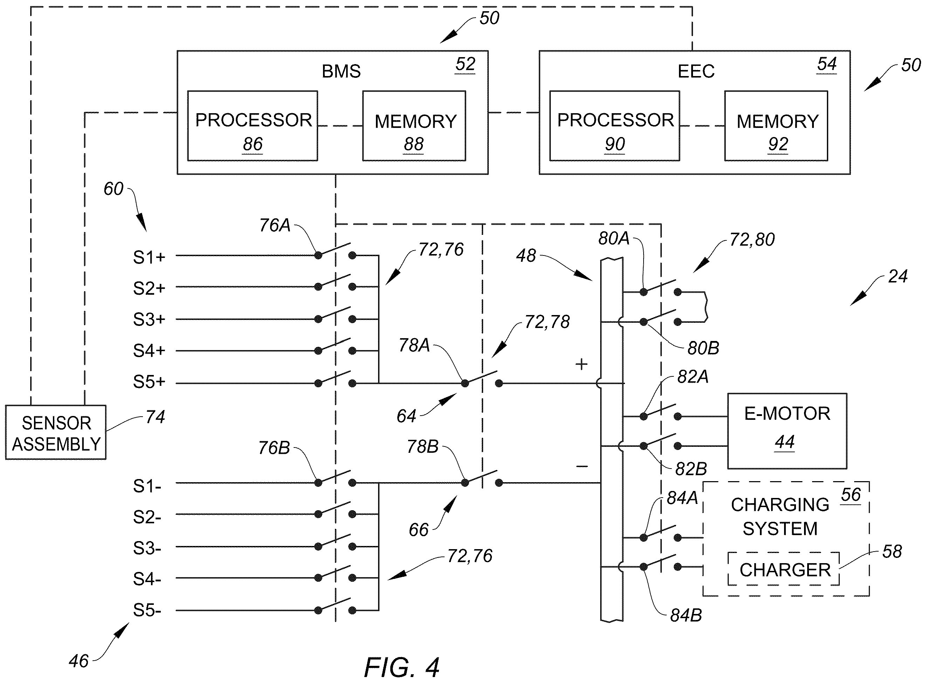

FIG. 4 schematically depicts an exemplary electric assembly 24 of the present disclosure. The electric assembly 24 includes the electrical distribution system 48, battery 46, BMS 52, EEC 54, a plurality of electrical contactors 72, and a sensor assembly 74. The battery 46 of FIG. 4 includes a plurality of battery strings 60 electrically connected together in parallel. For example, the plurality of battery strings 60 of FIG. 4 includes five (5) battery strings 60, S1-5 with their positive terminals 64 (e.g., S1+, S2+, S3+, S4+, S5+) electrically connected together at a positive battery terminal 68 of the battery 46 and their negative terminals 66 (e.g., S1-, S2-, S3-, S4-, S5-) electrically connected together at a negative battery terminal 70 of the battery 46.

The electrical distribution system 48 electrically interconnects components of the electric assembly 24. The electrical distribution system 48 includes switchgear, cables, wires, breakers, switches, contactors, electrical power conditional and/or conversion (e.g., AC to DC or DC to AC conversion) components and/or other electrical components to effect the transfer of electrical power between components of the electric assembly 24. For example, the electrical distribution system 48 of FIG. 4 electrically connects the electric motor 44 (and other electrical loads of the aircraft 18 and/or the propulsion system 20) with the battery 46 and other electrical sources (e.g., an electrical generator) of the electric assembly 24. Electrical distribution system 48 may additionally include one or more electrical power controllers, for example, to control a magnitude and/or direction of electrical current flow to components of the electric assembly 24. The electrical distribution system 48 is configured to supply electrical power to electrical loads of the aircraft 18, the propulsion system 20, and/or the engine 22.

The contactors 72 of FIG. 4 include string contactors 76 (e.g., a positive string contactor 76A and a negative string contactor 76B), battery contactors 78 (e.g., a positive battery contactor 78A and a negative battery contactor 78B), and load contactors 80 (e.g., positive load contactors 80A, negative load contactors 80B). Load contactors 80 may include electric motor contactors 82 (e.g., positive electric motor contactor 82A and negative electric motor contactor 82B), charging system contactors 84 (e.g., positive charging system contactor 84A and negative charging system contactor 84B), and the like. Of course, the present disclosure is not limited to the foregoing exemplary categories of electrical contactors. The contactors 72 are selectively disposable (e.g., switchable) in and between a closed configuration or an open configuration to conduct or interrupt an electrical current flow, respectively. Contactors 72 may include electrically controlled relays or switches which may be controlled by an electrical control signal to position the respective contactor 72 in the open configuration or the closed configuration.

Each of the battery strings 60 of FIG. 4 includes positive string contactor 76A and negative string contactor 76B. The positive string contactor 76A is electrically connected with each respective one of the battery strings 60 at the positive string terminal 64. The negative battery contactor 78B is electrically connected with each respective one of the battery strings 60 at the negative string terminal 66. Each of the positive string contactor 76A and the negative string contactor 76B is respectively disposable between the closed configuration and the open configuration to conduct or interrupt electrical current flow therethrough. For example, the positive string contactor 76A and the negative string contactor 76B for one of the battery strings 60, S1-5 may be in the closed configuration to electrically connect the respective battery string 60, S1-S5 to the electrical distribution system 48 or may be in the open configuration to electrically isolate the respective battery string 60, S1-5 from the electrical distribution system 48. While each of the battery strings 60 of FIG. 4 includes both the positive string contactor 76A and the negative string contactor 76B, the present disclosure is not limited to the use of both the positive string contactor 76A and the negative string contactor 76B for each of the battery strings 60 (e.g., the battery strings 60 may include the positive string contactor 76A or the negative string contactor 76B).

The battery contactors 78 of FIG. 4 include positive battery contactor 78A and negative battery contactor 78B. The positive battery contactor 78A is electrically connected between the battery strings 60 (e.g., the positive string terminal 64) and the electrical distribution system 48. The negative battery contactor 78B is electrically connected between the battery strings 60 (e.g., the negative string terminal 66) and the electrical distribution system 48. Each of the positive battery contactor 78A and the negative battery contactor 78B is respectively disposable between the closed configuration and the open configuration to conduct or interrupt electrical current flow therethrough. For example, the positive battery contactor 78A and the negative battery contactor 78B for the battery 46 may be in the closed configuration to electrically connect the battery to the electrical distribution system 48 or may be in the open configuration to electrically isolate the battery 46 from the electrical distribution system 48. While the battery 46 of FIG. 4 includes both the positive contactor 78A and the negative contactor 78B, the present disclosure is not limited to the use of both the positive contactor 78A and the negative contactor 78B (e.g., the battery 46 may include the positive contactor 78A or the negative contactor 78B).

The load contactors 80 may include positive load contactor 80A and negative load contactor 80B for one or more electrical loads of the aircraft 18 and/or its propulsion system 20. Each of the positive load contactor 80A and the negative load contactor 80B is respectively disposable between the closed configuration and the open configuration to conduct or interrupt electrical current flow therethrough. The positive load contactor 80A and the negative load contactor 80B for a respective electrical load may be in the closed configuration to electrically connect the electric load to the electrical distribution system 48 or may be in the open configuration to electrically isolate the electrical load from the electrical distribution system 48. Exemplary electric loads may include the electric motor 44 and battery charging system 56. For example, the electric motor 44 may electrically connect to the electrical distribution system 48 via positive motor contactor 82A and/or negative motor contactor 82B. Similarly, to perform electrical charging operations of the battery 46 the battery charging system 56 may electrically connect to the electrical distribution system 48 via positive charging system contactor 84A and/or negative charging system contactor 84B.

The battery monitoring system (BMS) 52 includes a BMS processor 86 connected in signal communication with BMS memory 88. The battery monitoring system 52 may be connected in communication with an electronic engine controller (EEC) 54 for the propulsion system 20 and its engine 22. The EEC 54 includes an EEC processor 90 connected in signal communication with EEC memory 92. In some embodiments, the EEC 54 may be part of a full authority digital engine control (FADEC) system for the propulsion system 20.

The BMS processor 86 and/or EEC processor 90 may include any type of computing device, computational circuit, processor(s), central processing unit (CPU), graphics processing unit (GPU), computer, or the like capable of executing a series of instructions that are stored in memory. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the BMS 52, the EEC 54, and its processors 86, 90 to accomplish the same algorithmically and/or coordination of electric assembly 24 components including, but not limited to, the electric motor 44, the battery 46, and the electrical distribution system 48. The BMS memory 88 and/or EEC memory 92 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly and/or indirectly coupled to the BMS 52 and/or EEC 54. The BMS 52 and/or EEC 54 may include, or may be in communication with, a user interface including one or more inputs devices and/or one or more output devices, for example, an input device that enables a user to enter data and/or instructions and an output device configured to display information (e.g., a visual display or a printer), or to transfer data, etc. Communications between the BMS 52 and external electrical or electronic devices may be via a hardwire connection or via a wireless connection. Communications between the EEC 54 and external electrical or electronic devices may be via a hardwire connection or via a wireless connection. A person of skill in the art will recognize that portions of the BMS 52 and/or EEC 54 may assume various forms (e.g., digital signal processor, analog device, etc.).

The BMS 52 may be configured as a charge monitoring device 50 to monitor conditions of the battery 46 including, but not limited to, state of charge, state of health, temperature, etc. The BMS 52 may be connected in communication (e.g., electrical or electronic communication) with the string contactors 76 and the battery contactors 78 to control positioning of the string contactors 76 and the battery contactors 78 in their respective open configurations and closed configurations. The BMS 52 may thereby control battery functions including, but not limited to, battery string power distribution, thermal management, string and/or cell balancing, battery charging, fault isolation, and the like. For example, the BMS 52 may control the string contactors 76 and/or the battery contactors 78 to electrically isolate one or more battery strings 60 or the entire battery 46 in response to identification of a fault condition, as discussed in further detail below. BMS 52 may be in communication with sensor assembly 74. Sensor assembly 74 may include, but is not limited to, one or more temperature sensors, current sensors, voltage sensors, and the like for the battery 46, string contactors 76, and/or the battery contactors 78.

The EEC 54 may control operating parameters of the engine including, but not limited to fuel flow, stator vane position (e.g., variable compressor inlet guide vane (IGV) position), compressor air bleed valve position, shaft (e.g., high pressure shaft 38 and/or low pressure shaft 42) torque and/or rotation speed, etc. so as to control an engine power or performance of the propulsion system 20. The EEC 54 may be configured as a charge monitoring device 50 to monitor conditions of the battery 46 including, but not limited to, state of charge, state of health, temperature, etc. The EEC 54 may be connected in communication (e.g., electrical or electronic communication) with the string contactors 76 and the battery contactors 78 to control actuation (e.g., positioning) of the string contactors 76 and the battery contactors 78 in their respective open configurations and closed configurations. The EEC 54 may control the string contactors 76 and/or the battery contactors 78 to electrically isolate one or more battery strings 60 or the entire battery 46 in response to identification of a fault condition, as discussed in further detail below. The EEC 54 may be in communication with a sensor assembly 74 including, but not limited to, one or more temperature sensors, current sensors, voltage sensors, and the like for the battery 46, string contactors 76, and/or the battery contactors 78.

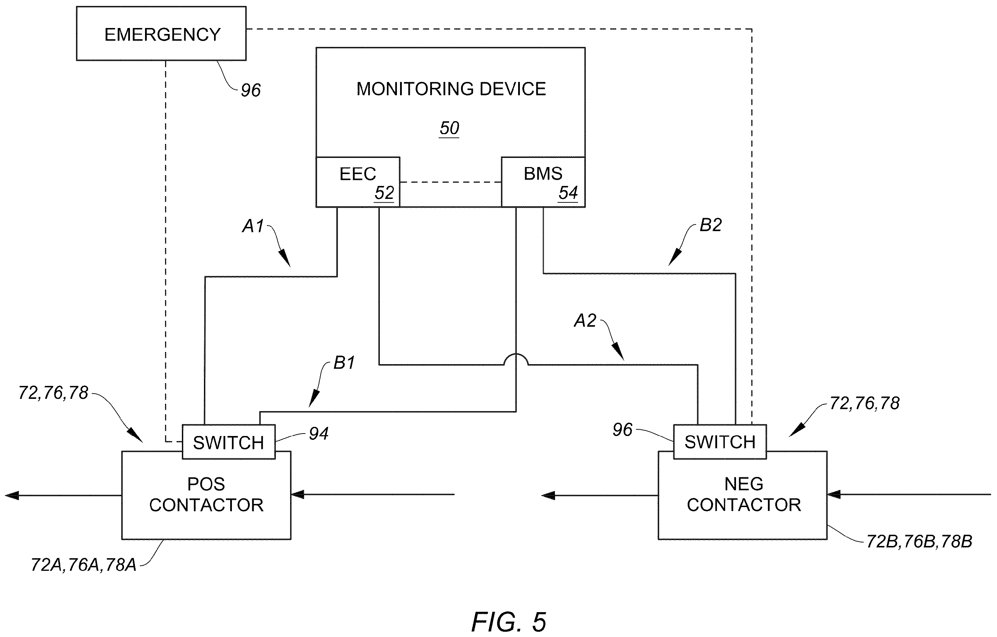

FIG. 5 schematically depicts an exemplary electrical/electronic communications arrangement of the electric assembly 24 shown in FIG. 4 according to one or more embodiments of the present disclosure. The communications arrangement includes contactors 72 (e.g., positive contactor 72A and negative contactor 72B), at least one charge monitoring device 50, and at least one switch 94. The switches 94 may comprise a relay, logic gate, and the like. One or more of the contactors 72 (e.g., string contactors 76 and/or battery contactors 78) are connected in communication (e.g., electrical or electronic communication) with the charge monitoring device 50 through switch 94. The charge monitoring device 50 may include the BMS 52, the EEC 54, or both. The BMS 52 and/or EEC 54 may monitor a parameter (e.g., current, voltage, temperature) of the contactor(s) 72 and may signal switch(es) 94 to actuate the contactor(s) 72 in their respective open configurations and closed configurations. In some embodiments, the EEC 54 may monitor and communicate with the positive contactor 72A via switch 94 through a discrete electrical/electronic channel (e.g., B1) independent of the BMS 52, and may monitor and communicate with a negative contactor 72B via switch 94 through a discrete electrical/electronic channel (e.g., B2). Alternately, the EEC 54 may monitor and communicate with the contactors 72A,72B through the BMS 52. In some embodiments, BMS 52 may monitor and communicate with the positive contactor 72A via switch 94 through an electrical/electronic channel (e.g., A1) which is discrete from (e.g., independent of) the EEC electrical/electronic channel(s). Similarly, the BMS 52 may monitor and communicate with a negative contactor 72B via switch 94 through an electrical/electronic channel (e.g., A2) independent of the EEC electrical/electronic channel(s). In some embodiments, the positioning of the positive contactor 72A and/or negative contactor 72B may be communicated to the switch(es) 94 by an emergency override/shutoff input 96. The emergency override/shutoff input 96 may be controlled by an operator, charging system, engine control system, and the like. In some embodiments, the communications arrangement may include a single switch 94 for initiating actuation of the positive contactor 72A between the open configuration and the closed configuration, and the negative contactor 72B between the open configuration and the closed configuration.

Common mode of failure during flight of hybrid-electric propulsion systems occurs due to erroneous charging operations of aircraft performed while the aircraft is landed. Thermal runaway during flight can occur because of common mode failure, which produces an increased current flow coupled with power dissipation. During charging operations of battery 46, charging outside of the battery specification limits can produce common mode failure. These limits can include charging the battery in weather conditions outside of specified temperature ranges, charging the battery to currents outside of specified current ranges, and charging the battery to voltages outside of specified voltage ranges. Routine experimentation and/or analysis may be performed by one of ordinary skill in the art to select the ranges of the temperature, current, and/or voltage suitable to produce common mode failure for the particular battery 46, the electrical assembly including the battery 46, the operating conditions of the electric assembly, and the safety and/or battery specification limits for the battery 46, in accordance with and as informed by one or more aspects of the present disclosure. Moreover, the limits of temperature, current, and/or voltage may be different for the type of battery 46 utilized within the electric assembly, or the specification needs (e.g., thrust output, power output) of the propulsion system utilizing the electric assembly of the present disclosure. Batteries are deemed unserviceable if charged outside of these specifications. In the present disclosure, the charge monitoring device(s) 50 (e.g., BMS 52 and/or EEC 54) may protect the battery 46 from charging outside specifications limits by monitoring a parameter (e.g., current, voltage, temperature) of one or more battery modules 62 through contactors 72 (e.g., string contactors 76 and/or battery contactors 78). In the event the charge monitoring device(s) 50 identify a parameter of the battery 46 is outside a parameter threshold (e.g., a fault condition threshold), the charge monitoring device 50 may signal the switch(es) 94 (e.g., via channels B1, B2, A1, or A2) to actuate one or more contactors 72 (e.g., positive contactor 72A and/or negative contactor 72B) from the closed configuration to the open configuration. In the open configuration, electrical current flow through the contactor(s) 72 is interrupted and charging operations of the battery 46 and/or battery string 60 will cease, preventing charging operations outside desired battery specifications.

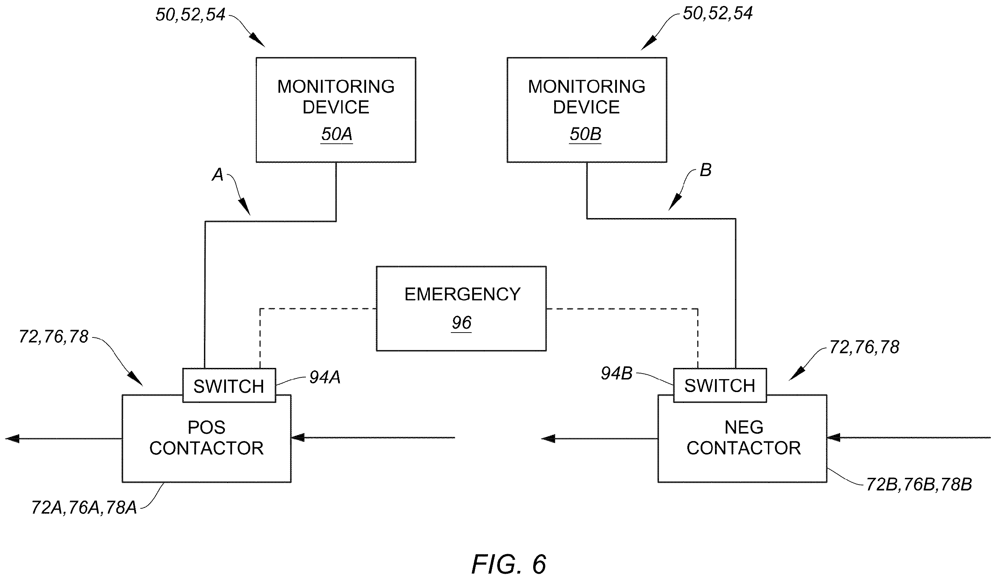

FIG. 6 schematically depicts an alternate exemplary electrical/electronic communications arrangement of the electric assembly 24 shown in FIG. 4 according to one or more embodiments of the present disclosure. The communications arrangement includes a plurality of contactors 72 (e.g., positive contactor 72A and negative contactor 72B), a first charge monitoring device 50A, a second charge monitoring device 50B, a first switch 94A, and a second switch 94B. The contactors may comprise string contactors 76 (e.g., positive string contactor 76A and negative string contactor 76B) and/or battery contactors 78 (e.g., positive battery contactor 78A and negative battery contactor 78B). One or more of the positive contactors 72A (e.g., string contactors 76A, battery contactors 78A) are connected in communication (e.g., electrical or electronic communication) with a first charge monitoring device 50A and first switch 94A. The first charge monitoring device 50A may comprise BMS 52, EEC 54, or both. The first charge monitoring device 50A may monitor a parameter (e.g., current, voltage, temperature) of the positive contactor(s) 72A and may signal first switch 94A to actuate the positive contactor(s) 72A in respective open configurations and closed configurations. The first charge monitoring device 50A may monitor and communicate with the positive contactor(s) 72A via first switch 94A through a discrete electrical/electronic channel (e.g., A). While the first charge monitoring device 50A of FIG. 6 is described as connected in communication with the positive contactor 72A, the present disclosure is not limited to any particular contactor polarity (e.g., positive, negative). The second charge monitoring device 50B may monitor and communicate with a negative contactor 72B via second switch 94B through an electrical/electronic channel (e.g., B) which may be discrete from (e.g., independent of) the first charge monitoring device 50A electrical/electronic channel. The second charge monitoring device 50B may comprise BMS 52, EEC 54, or both. While the second charge monitoring device 50B of FIG. 6 is described as connected in communication with the negative contactor 72B, the present disclosure is not limited to any particular contactor polarity (e.g., negative, positive). In some embodiments, the positioning of the positive contactor 72A and/or negative contactor 72B may be communicated to the first and/or second switch(s) 94A, 94B by an emergency override/shutoff input 96.

During battery charging operations, the charge monitoring device(s) 50 (e.g., BMS 52 and/or EEC 54) will monitor a charging parameter (e.g., current, voltage, temperature) of one or more battery modules 62 of the battery 46. In the event one or more of the charge monitoring devices 50 identify the charging parameter of the battery 46 is outside a parameter threshold (e.g., a fault condition threshold), the charge monitoring device(s) 50 may signal a respective contactor 72 (e.g., via channels A and/or B) to change the state of (e.g., actuate) the contactor 72 from the closed configuration to the open configuration. For example, upon identifying the presence of a fault condition threshold within the positive contactor 72A, the first charge monitoring device 50A may signal the first switch 94A to actuate the positive contactor 72A from the closed configuration to the open configuration. In the open configuration, electrical current flow through the positive contactor 72A is interrupted and charging operations of the battery 46 and/or battery string 60 will cease. Similarly, upon identifying the presence of a fault condition threshold within the negative contactor 72B, the second charge monitoring device 50B may signal the second switch 94B to actuate the negative contactor 72B from the closed configuration to the open configuration. In the open configuration, electrical current flow through the negative contactor 72B is interrupted and charging operations of the battery 46 and/or battery string 60 will cease, preventing charging operations outside desired battery specifications.

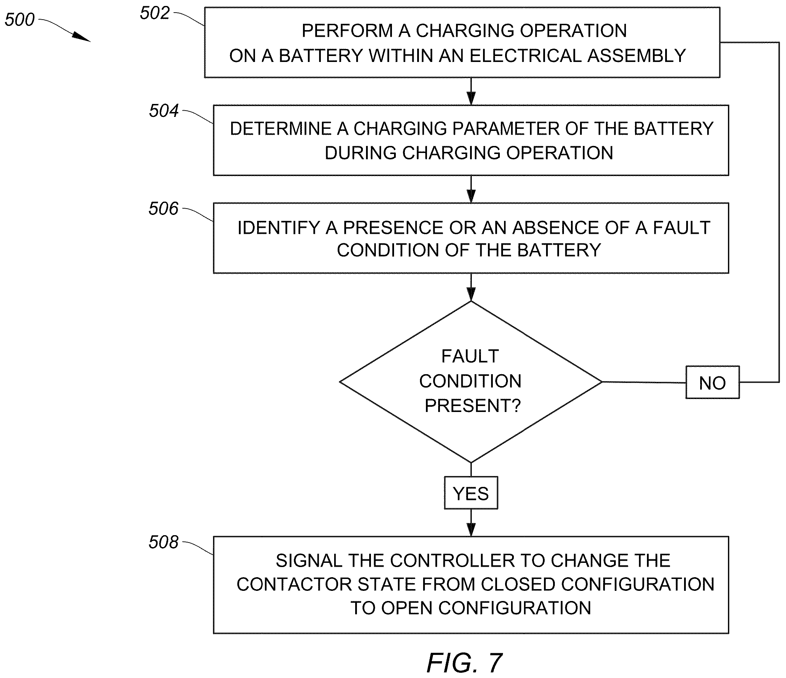

With reference to FIGS. 4-7, a method 500 for disconnecting battery 46 is provided. FIG. 7 illustrates a flowchart for method 500. The method 500 may be performed for propulsion system 20 and its electric assembly 24, as described herein. In particular, the method 500 will be described below for one of the contactors 72 (e.g., the string contactors 76, battery contactors 78, or another electrical contactors). The charge monitoring device(s) 50 (e.g., BMS 52 and/or EEC 54) may be used to execute or control (e.g., automatically without user input) one or more steps of the method. For example, the BMS processor 86, EEC processor 88, or both may execute instructions stored in memory, thereby causing the BMS 52, EEC 54, and/or its processor to execute or otherwise control (e.g., automatically without user input) one or more steps of the method. It should be understood, however, that method 500 is not limited to use with the particular propulsion system 20 described herein. Unless otherwise noted herein, it should be understood that the steps of method 500 are not required to be performed in the specific sequence in which they are discussed below and, in some embodiments, the steps of method 500 may be performed separately or simultaneously.

Step 502 includes performing a charging operation on a battery 46 within the electric assembly 24. The charging operation may include actuation of an operating state of one or more contactors 72 to perform a charging operation. The actuation operation includes changing the state of one or more contactors 72 from the open configuration to the closed configuration using the switch(s) 94. The actuation operations may be initiated by the charge monitoring device(s) 50 (e.g., BMS 52 and/or the EEC 54). In the alternative, actuation operations may be initiated and/or controlled by manual operation of the contactor 72 (e.g., a user input), or by another suitable control system.

Step 504 includes determining, using the charge monitoring device(s) 50 (e.g., BMS 52 and/or EEC 54) a charging parameter (e.g., current, voltage, temperature) of the battery 46 during battery charging operations. Alternatively, the charge monitoring device(s) 50 may determine a parameter (e.g., current, voltage, temperature) of the contactor 72, which corresponds to the charging parameter of the battery 46.

Step 506 includes identifying a fault condition of the battery 46 using the determined parameter of the battery 46 during charging operations (see Step 504). The charge monitoring device(s) 50 may identify the presence or absence of a fault condition of the battery 46 by comparing the determined parameter to a fault condition threshold. A value for the fault condition threshold for the battery 46 may be selected to include a charging temperature outside of (e.g., above or below) a specified range, a current outside of (e.g., above or below) a specified range, and/or a voltage outside of (e.g., above or below) a specified range. The charge monitoring device(s) 50 may identify the presence of the fault condition of battery 46 when the determined charging parameter is greater than or equal to (or otherwise exceeds) the fault condition threshold. Conversely, the charge monitoring device(s) 50 may identify the absence of the fault condition threshold of the contactor when the determined parameter is less than (or otherwise does not exceed) the fault condition threshold.

Step 508 includes signaling, upon determination of a fault condition, the switch 94 to actuate the contactor 72. The actuation operation may include changing the state of the contactor 72 from the closed configuration to the open configuration. In the open configuration, electrical current flow through the contactor 72 is interrupted and charging operations of the battery 46 and/or battery string 60 will cease. If no fault condition is detected, charge monitoring device(s) 50 may continue to monitor charging operations of battery 46. In some embodiments, actuation operation of the contactor 72 may be initiated by an emergency override/shutoff input 96. The emergency override/shutoff input 96 may be controlled by an operator, charging system, engine control system, and the like.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. An electric assembly for an aircraft, comprising:
a battery string comprising a plurality of battery modules electrically connected in series, the battery string including a contactor, the contactor disposable in an open configuration or a closed configuration;
a switch configured to actuate the contactor between the open configuration or the closed configuration;
a battery charging system in communication with the battery string, the battery charging system configured to perform a charging operation of the battery string;
a charge monitoring device electrically connected to and in signal communication with the contactor, the charge monitoring device including a processor in signal communication with a non-transitory memory storing instructions which, when executed by the processor, cause the processor to:
determine, a charging parameter of the contactor;
identify a presence of a fault condition for the contactor by comparing the charging parameter to a fault condition threshold, and the presence of the fault condition indicates the charging parameter exceeds the fault condition threshold; and
signal the switch to actuate the contactor from the closed configuration to the open configuration upon identifying the presence of the fault condition for the contactor.

2. The electric assembly of claim 1, wherein
the battery string includes a second contactor, the second contactor disposable between the open configuration or the closed configuration;
the switch configured to actuate the second contactor between the open configuration or the closed configuration; and
the instructions, when executed by the processor, further cause the processor to:
determine, a second charging parameter of the second contactor;
identify the fault condition for the second contactor by comparing the second charging parameter to the fault condition threshold, and the presence of the fault condition indicates the second charging parameter exceeds the fault condition threshold; and
signal the switch to actuate the second contactor from the closed configuration to the open configuration upon identifying the presence of the fault condition for the second contactor.

3. The electric assembly of claim 2, further comprising
a second charge monitoring device electrically connected to and in signal communication with the contactor and the second contactor, the second charge monitoring device including a second processor in signal communication with the non-transitory memory storing instructions which, when executed by the second processor, cause the second processor to:
determine, the charging parameter of the contactor or the second charging parameter of the second contactor;
identify the presence of the fault condition for the contactor by comparing the charging parameter to the fault condition threshold, or identify the presence of the fault condition for the second contactor by comparing the second charging parameter to the fault condition threshold, and the presence of the fault condition indicates the charging parameter or the second charging parameter exceeds the fault condition threshold; and
upon identifying the presence of the fault condition for the contactor or the second contactor, signal the switch to actuate the contactor or the second contactor from the closed configuration to the open configuration.

4. The electric assembly of claim 1, further comprising
a second charge monitoring device electrically connected to and in signal communication with the contactor, the second charge monitoring device including a second processor in signal communication with the non-transitory memory storing instructions which, when executed by the second processor, cause the second processor to:
determine, the charging parameter of the contactor;
identify the presence of the fault condition for the contactor by comparing the charging parameter to the fault condition threshold; and
signal the switch to actuate the contactor from the closed configuration to the open configuration upon identifying the presence of the fault condition for the contactor.

5. The electric assembly of claim 4, wherein the second charge monitoring device is electrically connected to the charge monitoring device and in signal communication with the contactor through the charge monitoring device, or wherein signal communication between the charge monitoring device and the contactor is discrete from signal communication between the second charge monitoring device and the contactor.

6. The electric assembly of any preceding claim, wherein the charge monitoring device comprises an electronic engine controller (EEC) for a propulsion system of the aircraft, and/or wherein the charge monitoring device comprises a battery monitoring system (BMS).

7. The electric assembly of any preceding claim, wherein the charging parameter comprises at least one of: a current, a voltage, or a temperature.

8. The electric assembly of any preceding claim, further comprising
an emergency override input electrically connected to the contactor and in signal communication with the switch, the emergency override input configured to signal the switch to actuate the contactor from the closed configuration to the open configuration, and/or wherein the charge monitoring device includes at least one sensor for determining the charging parameter of the contactor.

9. The electric assembly of claim 1, further comprising
a second contactor of the battery string, the second contactor disposable between the open configuration or the closed configuration;
a second switch configured to actuate the second contactor between the open configuration or the closed configuration;
a second charge monitoring device electrically connected to and in signal communication with the second contactor, the second charge monitoring device including a second processor in signal communication with the non-transitory memory storing instructions which, when executed by the second processor, cause the second processor to:
determine, the charging parameter of the second contactor;
identify the presence of the fault condition for the second contactor by comparing the charging parameter to the fault condition threshold; and
signal the second switch to actuate the second contactor from the closed configuration to the open configuration upon identifying the presence of the fault condition for the second contactor.

10. A propulsion system for an aircraft, comprising:
a battery;
a contactor in communication with the battery, the contactor disposable between an open configuration or a closed configuration;
a switch configured to actuate the contactor between the open configuration or the closed configuration; and
a charge monitoring device electrically connected to and in signal communication with the contactor, the charge monitoring device configured to determine a charging parameter of the contactor and determine a presence of a fault condition;
wherein upon determination of the presence of the fault condition, the contactor is actuated to the open configuration.

11. The propulsion system of claim 10, further comprising a battery charging system in communication with the battery, the battery charging system configured to perform a charging operation of the battery, and/or further comprising
an emergency override input electrically connected to the contactor, the emergency override input configured to actuate the contactor from the closed configuration to the open configuration.

12. The propulsion system of claim10 or 11, wherein the charge monitoring device comprises a battery monitoring system (BMS) or an electronic engine controller (EEC).

13. The propulsion system of claim 10, 11 or 12, further comprising
a second contactor in communication with the battery, the second contactor disposable between the open configuration or the closed configuration;
the switch configured to actuate the second contactor between the open configuration or the closed configuration; and
the charge monitoring device electrically connected to and in signal communication with the second contactor, the charge monitoring device configured to determine the charging parameter of the second contactor and determine the presence of the fault condition in the contactor or the second contactor;
wherein upon determination of the presence of the fault condition, the contactor or the second contactor is actuated to the open configuration.

14. The propulsion system of any of claims 10 to 13, wherein the charging parameter comprises at least one of: a current, a voltage, or a temperature.

15. A method of disconnecting a battery in an electric assembly of an aircraft propulsion system, the method comprising:
performing a charging operation on a battery within an electric assembly, the battery in communication with a contactor, the contactor disposable between an open configuration or a closed configuration;
determining using a charge monitoring device, a charging parameter of the contactor;
identifying a presence of a fault condition for the contactor, the presence of the condition identified where the charging parameter exceeds a fault condition threshold; and
actuating the contactor to the open configuration upon identifying the presence of the fault condition for the contactor.
